# EUROPEAN PATENT APPLICATION

(11) **EP 4 657 923 A1**
(43) Date of publication of application: **03.12.2025**
(21) Application number: 23918768.5
(22) Date of filing: 11.12.2023
(51) Int. Cl.: H04W 36/00, H04W 36/08, B64C 39/02, H04W 84/06

(54) **METHOD FOR PERFORMING CONDITIONAL HANDOVER FOR CRITICAL COMMUNICATION SERVICE, AND DEVICE THEREFOR**

(30) Priority: 27.01.2023 KR 20230010985
(71) Applicant: Hyundai Mobis Co., Ltd., Gangnam-gu Seoul 06141 (KR)
(72) Inventor: CHOI, Su Han, Gwacheon-si, Gyeonggi-do 13839 (KR)
(74) Representative: Jung, Minkyu
(86) International application number: PCT/KR2023/020345
(87) International publication number: WO 2024/158133

(57) **Abstract**

The present document relates to a method for performing a conditional handover for a critical communication service, and a device therefor. To this end, a method for performing a handover by a user equipment (UE) in a mobile communication system comprises: receiving, through two or more bearers, one communication service flow with a source network; receiving a first message including configuration information for performing a conditional handover for the two or more bearers from the source network; and on the basis of a target network and a time point at which a condition according to the configuration information is met, performing the handover for the two or more bearers to the target network.

## Description

### TECHNICAL FIELD

The following description relates to a method and apparatus for performing a handover by a user equipment (UE) in a system stably providing an important communication service.

### BACKGROUND

Wireless communication systems use various technologies such as LTE, LTE-Advanced, and WiFi, including 5G. The three major requirement areas of 5G are (1) enhanced mobile broadband (eMBB), (2) massive machine type communication (mMTC), and (3) ultra-reliable and low latency communications (URLLC). Some use cases may require multiple areas for optimization, while other use cases may focus on only one key performance indicator (KPI). 5G supports these various use cases in a flexible and reliable manner.

Among them, URLLC includes new services that will change industries through ultra-reliable/available low-latency links, such as remote control of critical infrastructure and self-driving vehicles. The level of reliability and latency is essential for smart grid control, industrial automation, robotics, drone control, and coordination.

The URLLC technology described above may be seen as a way to provide an important communication service with ultra-reliability and low latency. Even in this case, however, a link may be disconnected due to a poor channel condition or for various reasons, and in particular, there are limitations in stably providing an important service in a high-speed, aerial situation such as an uncrewed aerial system (UAS) as well as general vehicle communication.

Meanwhile, there has been no discussion on a handover method to support application of different bearer configurations to stably provide an important service as described above.

### DISCLOSURE

### TECHNICAL PROBLEM

In order to solve the above problem, one aspect of the present disclosure intends to provide a method and apparatus for stably providing an important communication service even in a situation such as a UAS.

More specifically, a method for configuring two or more bearers for one service flow, and a signaling method and apparatus for efficiently performing a handover in this case, to stably control a UAS and important communication services as well as the UAS are provided.

In addition, there is provided a method and apparatus for efficiently introducing a conditional handover concept to a duplexed/multiplexed bearer state to provide a stable handover service assuming various handover situations.

The problems which the present disclosure could solve are not limited to the problems described above, and other problems not described may be clearly understood by those skilled in the art to which the present disclosure belongs from the following description.

### TECHNICAL SOLUTION

According to an aspect of the present disclosure to solve the above-described problem, a method of performing a handover by a user equipment (UE) in a mobile communication system includes receiving one communication service flow with a source network through two or more bearers, receiving a first message including configuration information for performing a conditional handover for the two or more bearers from the source network, and performing a handover for the two or more bearers to the target network based on a point in time where a condition corresponding to the configuration information is satisfied, and a target network.

The handover for the two or more bearers may include performing a handover to the target network for a first bearer among the two or more bearers and adding one or more second bearers among the two or more bearers for the one communication service flow in the target network after the handover for the first bearer.

The adding of the second bearer may be based on that a sequence number state transfer between the source network and the target network is performed after the handover is performed for the first bearer.

The handover for the two or more bearers may be completed based on that the one or more second bearers are added.

On the other hand, the handover for the two or more bearers may include performing a handover to the target network for all of the two or more bearers.

The configuration information may include one or more candidate target networks and condition information for each of the candidate target networks.

The point in time and the target network may be determined according to whether a condition for each of the candidate target networks is satisfied.

The first message may be a radio resource control (RRC) reconfiguration message, and the RRC reconfiguration message may include information designating the two or more bearers as a conditional handover target.

The mobile communication system may include an uncrewed aerial system (UAS), and the one communication service flow served through the two or more bearers may include a command and control (C2) communication service flow of the UAS.

The mobile communication system may include the UAS and a mobile communication service provider system, and the source network and the target network may operate the mobile communication service provider system with the UAS.

The UE may include a uncrewed aerial vehicle (UAV).

According to another aspect of the present disclosure, a method of performing a handover for a user equipment (UE) by a source network in a mobile communication system includes providing one communication service flow to the UE through two or more bearers, transmitting a first message including configuration information for performing a conditional handover for the two or more bearers to the UE, transmitting a handover request message including information about the two or more bearers to one or more candidate target networks corresponding to the configuration information, and receiving an acknowledgement response message from the one or more candidate target networks.

The handover request message may further include slice information for supporting the two or more bearers, and the acknowledgement response message received from a candidate target network not supporting the slice among the one or more candidate target networks may include information corresponding to non-support for the slice.

A candidate target network having received a random access request message from the UE among the two or more candidate target networks may perform handover for the two or more bearers as a target network.

The handover for the two or more bearers may include performing a handover to the target network for a first bearer among the two or more bearers and adding one or more second bearers among the two or more bearers for the one communication service flow in the target network after the handover for the first bearer.

The target network may prepare for resource allocation for adding the one or more second bearers based on information about the two or more bearers of the handover request message.

According to another aspect of the present disclosure, a user equipment (UE) performing handover in a mobile communication system includes at least one processor and at least one computer memory operably connectable to the at least one processor and storing instructions that, when executed, cause the at least one processor to perform operations, in which the operations include receiving one communication service flow with a source network through two or more bearers, receiving a first message including configuration information for performing a conditional handover for the two or more bearers from the source network, and performing a handover for the two or more bearers to the target network based on a point in time where a condition corresponding to the configuration information is satisfied, and a target network.

According to another aspect of the present disclosure, a source network supporting handover of a user equipment (UE) includes at least one processor and at least one computer memory operably connectable to the at least one processor and storing instructions that, when executed, cause the at least one processor to perform operations, in which the operations include providing one communication service flow to the UE through two or more bearers, transmitting a first message including configuration information for performing a conditional handover for the two or more bearers to the UE, transmitting a handover request message including information about the two or more bearers to one or more candidate target networks corresponding to the configuration information, and receiving an acknowledgement response message from the one or more candidate target networks.

### ADVANTAGEOUS EFFECTS

According to the embodiments of the present disclosure as described above, an important communication service may be stably provided even in a situation such as a UAS.

Specifically, in a situation where two or more bearers are configured for one important communication service flow, an efficient handover may be supported by efficiently transmitting the same in a message between network entities to support the handover.

Moreover, assuming various handover situations, a means for applying a conditional handover concept to provide a stable handover service while preferentially performing a conditional handover for a specific bearer of duplexed/multiplexed bearers, and efficiently duplexing/multiplexing the bearer may be provided.

The effects obtainable from the present disclosure are not limited to the effects described above, and other effects not described may be clearly understood by those skilled in the art to which the present disclosure belongs from the description below.

### BRIEF DESCRIPTION OF THE DRAWINGS

FIG. 1 is a diagram illustrating the concept of a UAS.
FIG. 2 is a diagram for describing a method of receiving a communication service by a UE, according to an embodiment of the present disclosure.
FIG. 3 is a diagram for describing a method of supporting a handover of a UE by a network, according to an embodiment of the present disclosure.
FIG. 4 is a diagram for describing a method of supporting a handover of a UE by a network, according to another embodiment of the present disclosure.
FIG. 5 is a diagram for describing a procedure of a conditional handover to be used in an embodiment of the present disclosure.
FIG. 6 is a diagram for describing detailed embodiments for performing a conditional handover in a duplexed bearer.
FIGS. 7 and 8 are diagrams for describing a conditional handover procedure including an operation of a network stage, according to the current embodiment of the present disclosure.
FIGS. 9 and 10 are diagrams for describing a configuration of a handover request message and/or a handover request response message according to an embodiment of the present disclosure.
FIG. 11 is a diagram for describing the concept of duplexing/multiplexing DRBs for an important communication service, according to an embodiment of the present disclosure.
FIG. 12 is a diagram for describing the concept of forming two or more service flows mapped to the same QFI in a network link for an important communication service, according to an embodiment of the present disclosure.
FIG. 13 is a diagram for describing a method of operating a service flow in each stage by a network according to an embodiment of the present disclosure.
FIG. 14 is a diagram for describing changes of a QoS ID used in a network according to an embodiment of the present disclosure.
FIG. 15 is a diagram for describing a structure for duplexing/multiplexing DRBs for an important communication service, according to an embodiment of the present disclosure.
FIG. 16 is a conceptual diagram for comparing a conditional handover with a general handover, according to an embodiment of the present disclosure.
FIG. 17 illustrates wireless devices applicable to the present technology.

### DETAILED DESCRIPTION

With reference to the attached drawings, embodiments of the present disclosure will be described in detail so that those skilled in the art may easily implement the present disclosure. However, the present disclosure may be implemented in various different forms and is not limited to the embodiments described herein. In addition, in order to clearly describe the present disclosure, parts that are not related to the description are omitted in the drawings, and similar parts are given similar reference numerals throughout the specification.

Throughout the specification, when it is said that a part "includes" a certain component, this does not mean that other components are excluded, but that other components may be additionally included, unless otherwise specifically stated.

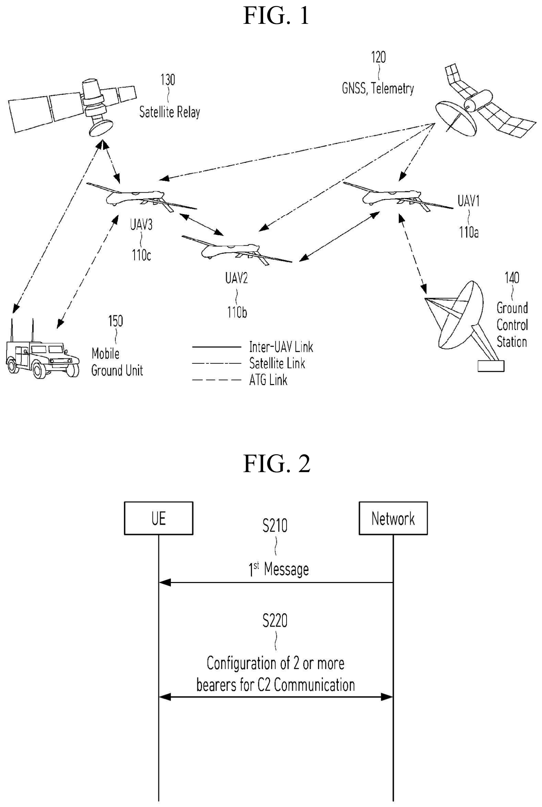

FIG. 1 is a diagram illustrating the concept of a UAS.

As illustrated in FIG. 1, the UAS may include one or more uncrewed aerial vehicles (UAVs) 110a, 110b, and 110c (e.g., drones) and at least one ground control station 140 (or a ground control center or a ground control server) that manages them, and may be linked to a mobile communication service provider system to provide an efficient communication service to the UAV(s).

In the following description, a 'mobile communication system' is assumed to be a concept including a mobile communication service provider system operated by a conventional mobile communication service provider, and a UAS. In such a mobile communication system, a conventional mobile communication service and a UAS service may be defined by a single communication standard (e.g., the 3GPP standard).

A network described below may operate to link the mobile communication service provider system to the UAS. That is, in the following description, the network is assumed to be a concept including a network of the mobile communication service provider system and a network for the UAS.

The UAVs 110a, 110b, and 110c may be used as a general concept for unmanned aerial logistics and/or transportation means capable of vertical takeoff and landing, which is only an embodiment. According to another embodiment of the present disclosure, the UAVs 110a, 110b, and 110c may be used as a concept that further includes manned aerial logistics and/or transportation means capable of vertical takeoff and landing.

The mobile communication system may be configured to include a network including a base station (BS) and a core network (CN), and various user devices liked to the network. Hereinafter, various user devices linked to the network will be collectively referred to as "user equipments (UEs)", for the convenience of description.

In an embodiment, the network may be linked to the ground control station 140 and additionally linked to a global navigation satellite system (GNSS) 120 for providing location information and/or a satellite relay 130 for satellite communication.

In an embodiment, the UE may be provided with a global positioning system (GPS) receiver and directly receive a signal from the GNSS 120 and/or the satellite relay 130.

In another embodiment, the network may be used as a general concept including all of BSs, a CN, and the ground control station 140. In this case, the mobile communication system may be used as a concept including the UAS.

UEs receiving a communication service from the UAS may include not only the UAVs 110a, 110b, and 110c described above, but also a mobile ground unit 150. That is, the 'UEs' are assumed to be the UAVs 110a, 110b, and 110c for convenience in the following description, to which the UEs are not limited, and do not exclude the mobile ground unit 150 as illustrated in FIG. 1 or a general mobile phone/smartphone.

In FIG. 1, inter-UAV links may be established among the UAVs 110a, 110b, and 110c and correspond to sidelinks in the 3^{rd} Generation Partnership Project (3GPP). The UASs 110a, 110b, and 110c may establish satellite links with the satellite units 120 and 130 and be connected to the ground units 140 and 150 via aerial to ground (ATG) links.

FIG. 2 is a diagram for describing a method of receiving a communication service by a UE, according to an embodiment of the present disclosure.

In 3GPP mobile communication to date, one bearer is configured and used for one specific service in a process of transmitting service data for one UE. However, the current embodiment proposes a method of providing a command and control (C2) communication service to monitor in real time an operation state of a UAV via a ground network or remotely control the UAV and configuring and using two or more bearers for an important communication service such as a C2 communication service, in one C2 communication service flow, at the ground control station 140 of the UAS.

In the current embodiment, the importance of a communication service may be determined based on at least one of delay characteristics required for the service, security characteristics (or level) required for the service, whether it is related to the safety of operation (or driving), a data transmission error rate required for the service, or the reliability of link maintenance required for the service, to which the present disclosure is not limited, and the determination may be made by additionally considering various service characteristics according to the design of those of ordinary skill in the art.

Configuring a radio bearer (RB) means a process of defining the characteristics of radio protocol layers and channels and setting each specific parameter and operation method in order to provide a specific service. RBs may be divided into two types, signaling radio bearer (SRB) and data radio bearer (DRB). The SRB is used as a path for transmitting an RRC message in the control plane, and the DRB is used as a path for transmitting user data in the user plane.

To this end, it is proposed that in a mobile communication system including a UAS (or linked to the UAS via a network), when a UE receives a first message including bearer-related information, that is, information for bearer configuration or reconfiguration from a network (S210) and configures bearers with the network based on the first message (S220), as shown in FIG. 2, two or more RBs are configured for a C2 communication service of the UAS, for example, for one service flow/bearer/session for the C2 communication service. Preferably, the bearer-related information included in the first message includes information for configuring two or more bearers for one service flow for one C2 communication service flow of the UAS.

The first message may be a radio resource control (RRC) reconfiguration message.

While the description of FIG. 2 has been made assuming that the first message (S210) is an RRC message, to which the present disclosure is not limited, the first message (S210) may be system information or a non-access-stratum (NAS) message.

That is, the UE may receive a quality of service (QoS) rule for mapping two or more DRBs to a QoS flow corresponding to a specific QoS flow identifier (QFI) through the NAS message (S210) received by the UE in the PDU session setup or change procedure, and thus the network may provide a C2 communication service through two or more DRBs.

The RRC layer is defined only in the control plane. The RRC layer is responsible for controlling logical channels, transport channels, and physical channels in relation to the configuration, re-configuration, and release of RBs. An RB refers to a logical path provided by a first layer (a physical layer or PHY layer), a second layer (a medium access control (MAC) layer), a radio link control (RLC) layer, and a packet data convergence protocol (PDCP) layer, for data transmission between the UE and the network.

When an RRC connection is established between the RRC layer of the UE and the RRC layer of the BS, the UE is in an RRC_CONNECTED state, and otherwise, it is in an RRC_IDLE state. In NR, an RRC_INACTIVE state is additionally defined, and a UE in the RRC_INACTIVE state may maintain a connection, for example, a session with a CN, while releasing a connection, for example, a radio link with the base station. This allows the UE to receive a fast communication service by establishing a radio link as needed without performing a separate session setup procedure in the RRC_INACTIVE state.

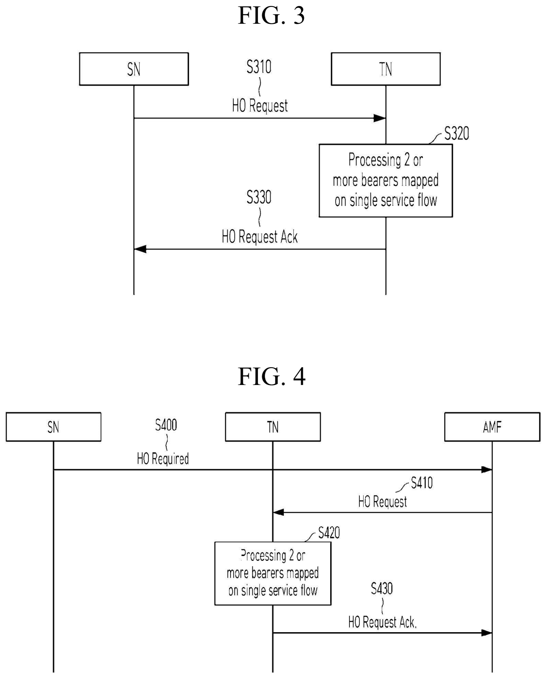

FIG. 3 is a diagram for describing a method of supporting a handover of a UE by a network, according to an embodiment of the present disclosure.

In FIG. 3, 'SN' refers to a source network device, and 'TN' refers to a target network device. For example, in a 5G system, 'SN' refers to a source gNB, and 'TN' refers to a target gNB, but the present disclosure is not limited thereto, and devices corresponding to 'SN' and 'TN' may be indicated variously according to the standardization.

First, in FIG. 3, the TN may receive a handover request message from SN (S310). Herein, the handover request message may be regarded as a message for informing the TN that a handover of a specific UE is required due to a received signal quality of the SN and/or a measurement report of the UE, etc. However, the current embodiment proposes transmitting, through the handover request message, information indicating that the corresponding UE includes a bearer configured to receive SN and one communication service flow through two or more bearers.

Hereinafter, for convenience of a description, the communication service flow will be described interchangeably with a 'service flow'.

The TN may perform processing for performing a handover for two or more bearers mapped to one service flow based on the bearer configuration information (S320), and transmit the handover request response message to the SN based thereon (S330).

A method illustrated in FIG. 3 corresponds to an example in which if the TN/SN corresponds to a base station, a handover is performed through an Xn interface of the 5G system. However, in addition to the handover using the Xn interface, the 5G system also supports operations in which the Access and Mobility management Function (AMF) initiates the handover.

FIG. 4 is a diagram for describing a method of supporting a handover of a UE by a network, according to another embodiment of the present disclosure.

FIG. 4 shows an embodiment for describing a case where a handover is initiated by the AMF in a state where the specific UE is registered in the AMF of a core network (CN) stage as well as the SN/TN.

The SN according to an embodiment determines whether a handover is required based on a measurement report message including information about the received signal quality of the specific UE, and informs the AMF of a need for the handover according to a determination result (S400). In this case, the AMF may transmit the handover request message to the TN (S410).

Another SN according to another embodiment may determine whether a handover for a specific UE is required, based on at least one of an internal resource allocation state, an uplink channel state, a network load state, and an internal processing load state, and inform the AMF of a need for the handover according to a determination result. However, the current embodiment also proposes transmitting the handover request message, transmitted by the AMF, including information indicating that the corresponding UE includes a bearer configured to receive SN and one communication service flow through two or more bearers.

The TN may perform processing for performing a handover for two or more bearers mapped to one service flow based on the bearer configuration information (S420), and transmit the handover request response message to the AMF based thereon (S430).

As described above, an embodiment of the present disclosure proposes a conditional handover method for communication designed to immediately perform important control seamlessly in the case of cutoff of a single bearer or link, by configurating a duplexed/multiplexed bearer or link for a link for transmitting and receiving a very important command such as UAV control.

In particular, the conditional handover method included in the 3GPP Rel.16 may be used in a situation where a radio channel condition in a handover area deteriorates rapidly when high-frequency band communication is performed, and thus the link may be disconnected when a general handover procedure is performed.

In a general handover condition, when a handover situation occurs, the UE reports this situation to the SN (e.g., a serving base station), and when the SN transmits a handover command to the UE, the UE having received the command performs a handover to the TN (e.g., a target base station). However, if the link condition deteriorates rapidly, there is a high possibility that the link will be disconnected during a process of exchanging these messages.

Therefore, in the conditional handover, the SN transmits a handover command to the UE in advance when the link condition is not too poor, and the UE performs a handover to the TN using information of the handover command received in advance without further receiving a command from the SN when a certain condition is met.

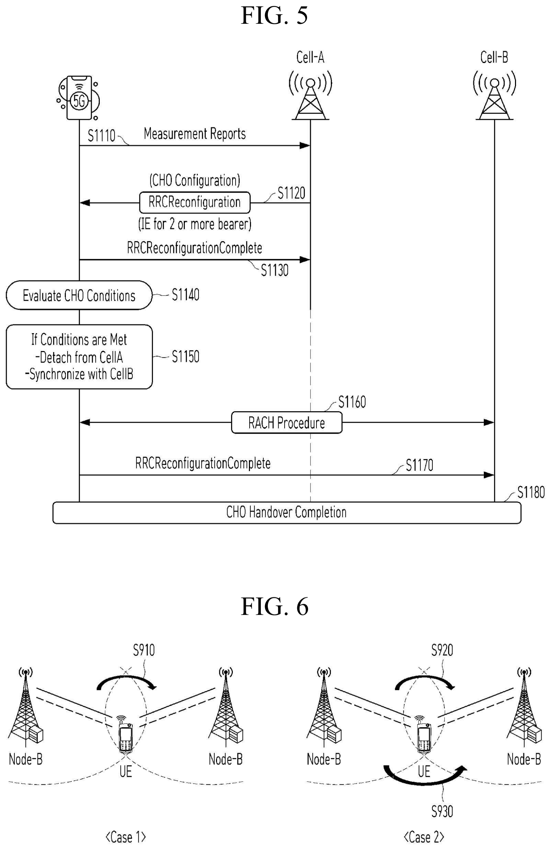

This will be described in detail with reference to FIG. 5.

FIG. 5 is a diagram for describing a procedure of a conditional handover to be used in an embodiment of the present disclosure.

The UE transmits a measurement report to a cell A corresponding to the SN (S1110) to allow the cell A to monitor a radio state with the UE. The cell A, which utilizes duplexed/multiplexed bearers to support an important communication service, may transmit a first message to the UE including configuration information for performing a conditional handover (CHO) to the UE to seamlessly provide services (S1120). The first message may have the format of an RRC reconfiguration message as illustrated in FIG. 5. The RRC reconfiguration message may include information designating a duplexed/multiplexed bearer as a conditional handover target. The above-described configuration information may include one or more candidate target networks and condition information for performing a handover for each of the candidate target networks.

The UE having received the first message may transmit a second message that is a response message to the cell A, which may be an RRC reconfiguration complete message as shown in FIG. 5 (S1130).

The UE having received the information for performing the conditional handover as described above continuously evaluates the received condition for performing the conditional handover rather than immediately performing the handover (S1140) and perform the handover to the target network at a point in time when the corresponding condition is met (S1150). Monitoring a channel state with each candidate target network may include, for example, monitoring a case where a reference signal received power (RSRP) is less than a threshold value corresponding to the condition information. That is, the UE may perform a prescribed handover operation without an additional command from the cell A when the corresponding condition is met.

The example of FIG. 5 shows a case where a cell B among several candidate target networks satisfies a condition and operates as a target network, and the conditional handover may include a procedure for performing separation from the cell A, which is the SN, and performing synchronization based on a synchronization signal of the cell B, which is the TN (S1150).

Thereafter, the UE may perform a random access procedure to the cell B that is the TN (S1160). In the current embodiment, it is assumed that a duplexed/multiplexed bearer for one important service is handed over, it is preferable that a single random access procedure is performed for a handover for the duplexed/multiplexed bearer.

Thereafter, the UE may transmit an RRC reconfiguration complete message to the cell B (S1170) and complete the conditional handover procedure through this process (S1180).

The method for applying the conditional handover to the duplexed/multiplexed bearer as illustrated in FIG. 5 may be classified as described below.

FIG. 6 is a diagram for describing detailed embodiments for performing a conditional handover in a duplexed bearer.

As illustrated in FIG. 6, a method for performing a conditional handover to bearers duplexed/multiplexed and used in a serving cell may be classified into <Case 1> where a handover is simultaneously applied to the duplexed/multiplexed bearers (S910) and <Case 2> where after application of the handover to a first bearer among the duplexed/multiplexed bearers (S920), one or more second bearers are guided to be directly added in the TN (S930).

Describing <Case 1> as a simplified case using a duplexed bearer, while stably handing over two DRBs from the SN to the TN in a conditional manner, information about the duplexed DRBs is included in a handover message to hand the two DRBs over to the TN.

Describing <Case 2> as a simplified case using a duplexed bearer, while stably handing over only a primary DRB of the two DRBs from the SN to the TN in the conditional manner, information about the duplexed DRB is included in the handover message to stably hand over the primary DRB from the TN and then further connect a secondary DRB in the TN, thereby duplexing the DRB also in the TN.

Between <Case 1> and <Case 2>, <Case 2> has an advantage in light of complexity of signaling, and hereinbelow, <Case 2> will be mainly described without excluding <Case 1>.

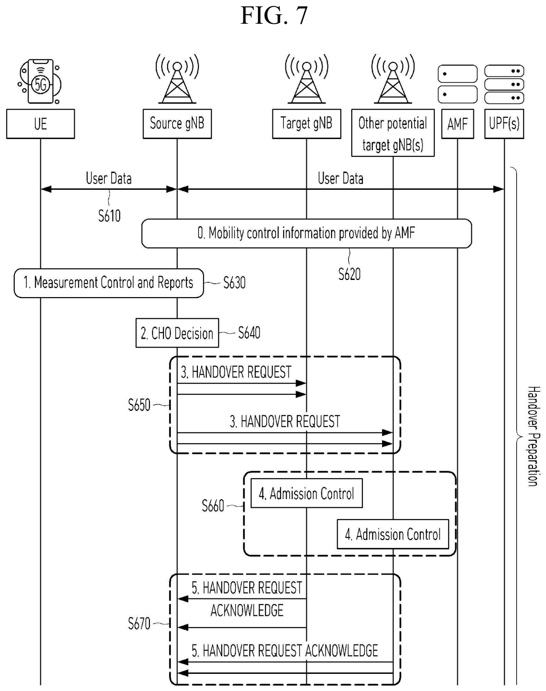

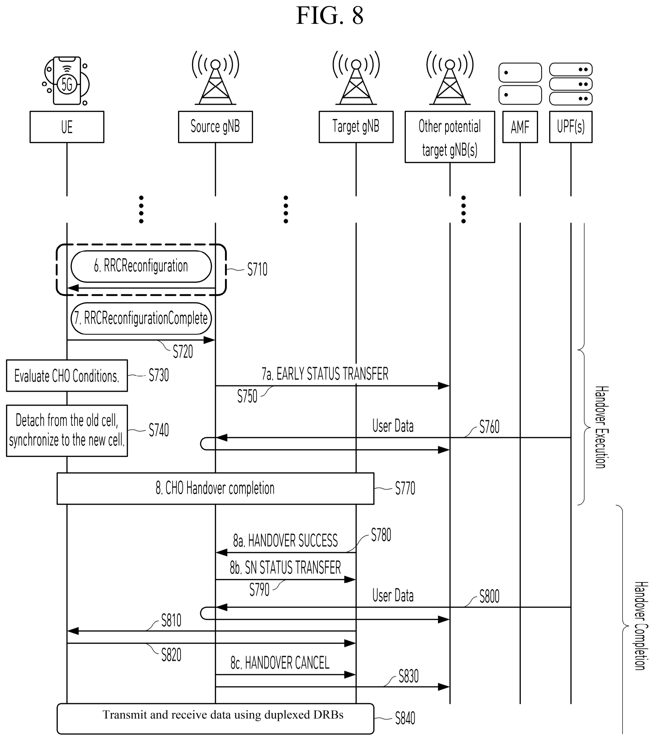

FIGS. 7 and 8 are diagrams for describing a conditional handover procedure including an operation of a network stage, according to the current embodiment of the present disclosure.

First, the UE may transmit/transmit data through a duplexed/multiplexed bearer for an important communication service from a serving gNB (S610). As such, data transmission through the duplexed/multiplexed bearer may be performed through a configuration as illustrated in FIG. 2.

Mobility control information of the UE may be provided by the AMF and shared between network entities (S620).

The UE may perform measurement for monitoring a channel state of the serving gNB, the measurement of the UE may be controlled by the serving gNB and may be reported from the UE (S630). Based thereon, a source gNB may make a handover decision, and in a situation where the bearer is duplexed/multiplexed for the important communication service, the source gNB according to the current embodiment decides the conditional handover (CHO) (S640). If the bearer is duplexed/multiplexed for the important communication service, a seamless service is required in the handover process as described above, and to this end, signaling is performed for a handover before a radio channel deteriorates, and it is advantageous for the UE to quickly respond to the situation where the radio channel deteriorates.

If the source gNB makes a handover decision, the source gNB may transmit a handover request message to a candidate target gNB (S650). For the conditional handover (CHO), without specifying a target gNB to one as described above, a handover request message may be transmitted to a plurality of candidate target gNBs.

In this case, as described above, it is preferable that the handover request message includes information about the duplexed/multiplexed bearer for one service flow. The handover request message may further include slice information for supporting the duplexed/multiplexed bearer.

For the received handover request message, the candidate target gNBs may perform admission control (S660). For example, for the candidate target gNB not supporting a slice indicated by the handover request message among the one or more candidate target gNBs, it is desirable to reject a corresponding PDU session or perform a separate process such as performing resource allocation to an alternative slice.

After admission control, the candidate target gNB may transmit a handover request response message through an Xn interface (S670). An acknowledgement message received from the candidate target gNB preferably includes information about non-support for the slice.

The source gNB having received the handover request response message from the target gNB may transmit an RRC reconfiguration message to the UE based thereon in which the RRC reconfiguration message corresponds to a CHO command (S710). Based on the CHO command, the UE may perform HO once for all the duplexed/multiplexed DRBs or perform HO only for a specific DRB among them, as described above with reference to FIG. 6.

After transmission of the CHO command, the source gNB exchanges early state information with the candidate target gNB (S750) and performs data exchange between gNBs through the Xn interface (S760).

For CHO, as described above, the UE evaluates a condition included in the received CHO command (S730) and performs a handover procedure by attempting a random access to the target gNB by the UE when the condition is satisfied (S740).

In case of a success in such a random access procedure, the target gNB may transmit an RRC reconfiguration complete message to the UE such that a radio access network (RAN) HO procedure may be regarded as being completed (S770).

As there are a plurality of candidate target gNBs for the CHO unlike general HO, the target gNB having completed the RAN HO procedure with the UE as described above transmits a message informing the source gNB of a handover success at the corresponding point in time (S780) and for the transmission, sequence number state transfer may be performed from the source gNB (S790). Based thereon, data may be transferred to the target gNB from the source gNB (S800).

If the CHO is performed as in <Case 2> between the two methods described with reference to FIG. 6, the target gNB may transmit a command for adding the secondary DRB to the UE (S810). The command for adding the DRB may have the format of the RRC reconfiguration message. Thus, the UE may add the secondary DRB for bearer duplexing/multiplexing and report the same to the target gNB, which may have the format of an RRC reconfiguration complete message (S820).

For the CHO, according to a circumstance, the source gNB may transmit a handover cancel message to the candidate target gNBs and inform the same to a candidate target gNB to which the UE does not hand over among the candidate target gNBs.

Based on the above-described procedure, the UE may transmit and receive data with the target gNB using the duplexed/multiplexed DRBs (S840).

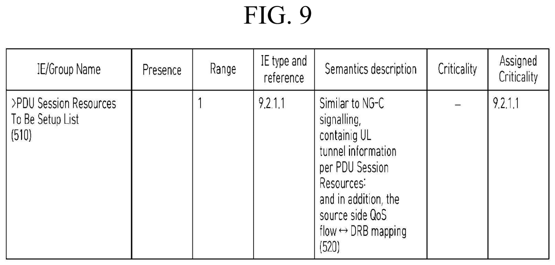

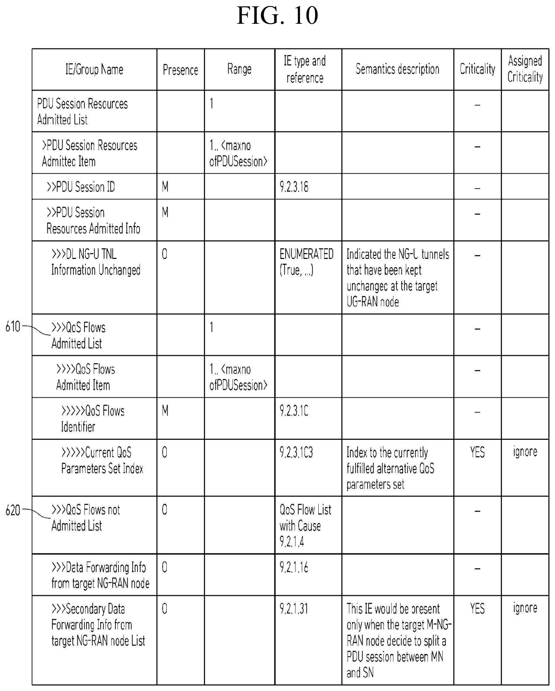

FIGS. 9 and 10 are diagrams for describing a configuration of a handover request message and/or a handover request response message according to an embodiment of the present disclosure.

In the embodiments described with reference to FIGS. 7 and 8, the handover request message and/or the handover request response message may include a protocol data unit (PDU) session resource configuration related field 510 including mapping information 520 between a QoS flow and a DRB, as illustrated in FIG. 9. In such a message structure, information in which two or more DRBs are mapped to one service flow in an SN for an important communication service may be transmitted through the mapping information 520 between the QoS flow and the DRB.

In an embodiment of the present disclosure, the mapping information 520 or an added field may indicate candidate TN information for CHO and condition information for each candidate TN.

Meanwhile, the PDU session resource configuration related field may include an admitted QoS flow list 610 and a non-admitted QoS flow list 620 as shown in FIG. 10. Herein, two or more QoS flow identifiers included in the admitted QoS flow list 610 may include an identifier for a QoS flow to which two or more bearers are mapped, preferably, information indicating the same.

Meanwhile, the concept of duplexing/multiplexing a bearer for an important communication service as described above will be described in detail.

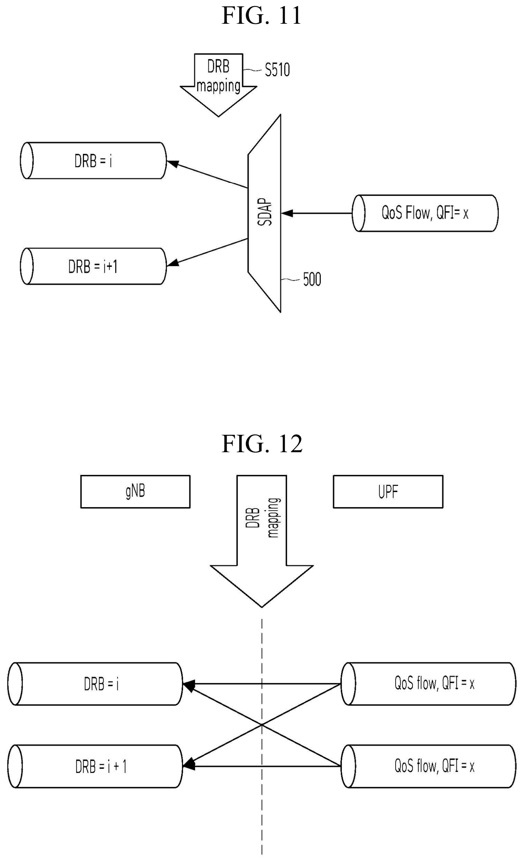

FIG. 11 is a diagram for describing the concept of duplexing/multiplexing DRBs for an important communication service, according to an embodiment of the present disclosure.

In FIG. 11, a transmitter for transmitting data may be a UE for uplink transmission and may be a network for downlink transmission, especially, a base station (gNB) in a radio link. The base station may be referred to as an eNB in LTE and a gNB in 5G, but may also be referred to as a node communicating with a UE through radio link transmission in terms of a network. Hereinbelow, for convenience, gNB will be used by taking 5G as an example, but the present disclosure is not limited thereto.

As illustrated in FIG. 11, a transmitting device may manage transmission data on a QoS flow basis, and to this end, assign an ID (QoS flow ID (QFI)) to each QoS flow. Thus, a specific entity (e.g., a service data adaptation protocol (SDAP) 500) of the transmitting device may perform DRB mapping (S510) based on the QFI.

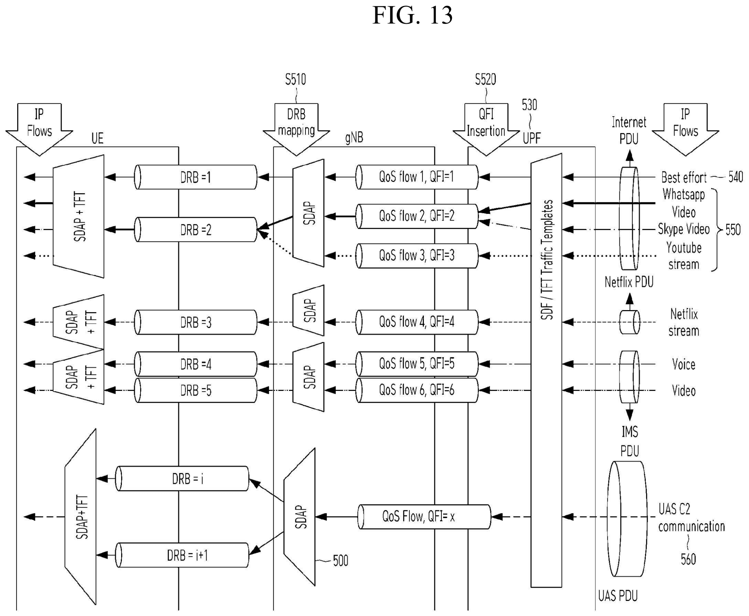

According to the current 5G standardization, there was no case of mapping a QoS flow corresponding to one QFI to two or more DRBs during the DRB mapping (S501) of the SDAP. As will be described below in relation to FIG. 13, the SDAP in the current 5G standardization maps a QoS flow corresponding to one QFI to one DRB or multiplex two or more QoS flows to one DRB.

However, in the present embodiment, a specific QFI (e.g., QFI = x) corresponding to an important communication service such as the C2 communication service of the UAS as described above may be defined, and it is proposed that for a QoS flow having the specific QFI, the corresponding service is provided by mapping the QoS flow to two or more DRBs, as illustrated in FIG. 11. A specific QFI (=x) mapped to two or more DRBs or a service of a QoS indicator group corresponding to a specific QFI group as will be described below is not necessarily limited to only C2 communication of the UAS. For example, in vehicle-to-everything (V2X) communication, a specific service requiring stability among services currently defined as ultra-reliable low-latency communication (URLLC) may operate by mapping it to a QFI for which DRB duplication/multiplexing is performed as described above.

FIG. 12 is a diagram for describing the concept of forming two or more service flows mapped to the same QFI in a network link for an important communication service, according to an embodiment of the present disclosure.

As described above in relation to FIG. 11, mapping two or more bearers to one QoS flow may be applied, limited to a radio link between the base station and the UE. However, depending on a circumstance, a path needs to be duplexed/multiplexed for an important communication service even in a network link, the concept of which is illustrated in FIG. 12.

In the embodiment illustrated in FIG. 12, it is assumed that two or more bearers are formed in the radio link between the UE and the base station. Moreover, FIG. 12 illustrates the concept in which two or more service flows having the same QFI (QFI = x) respectively mapped to the two or more bearers are formed in the network link between the base station (gNB) and a core network (specifically, the UPF).

FIG. 13 is a diagram for describing a method of operating a service flow in each stage by a network according to an embodiment of the present disclosure.

As illustrated in FIG. 3, IP flows provided through a communication service may include a best effort service less sensitive to delay, such as a file download service, and a real-time video/audio streaming service sensitive to delay. In addition, the IP flows are shown as including an IP flow for UAS C2 communication in FIG. 13.

A CN that provides the communication service includes an entity of a session management function (SMF) (not shown), an entity of a user plane function (UPF) 530, and the above-described AMF (not shown), and the various IP flows described above may form protocol data units (PDUs) for each service within the CN and provide them to the UPF 530.

The UPF 530 may perform data transmission through a traffic flow template (TFT) in consideration of a service data flow (SDF). Specifically, the UPF 530 may assign/map a QFI to an IP packet received for each SDF (S520).

The UPF 530 may map the IP packet received for each SDF to the corresponding QFI according to a packet detection rule (PDR) set by the SMF (not shown). In the current embodiment, an example is illustrated in which the UPF 530 maps an IP packet for a UAS C2 communication service flow to a specific QFI (=x) (S520).

Thereafter, a gNB of the network may perform DRB mapping corresponding to each QFI (S510), which may be performed by the SDAP 500 of the gNB, for example, for downlink transmission.

According to the current 5G standard as described above, when DRB mapping is performed on a QFI basis in the SDAP 500, only cases where a QoS flow corresponding to one QFI is mapped to one DRB (=1) such as a best effort service 540, or a QoS flow corresponding to a plurality of QFIs is mapped to one DRB (=2) such as various video services 550 have been specified.

However, the current embodiment proposes that for an important communication service such as a UAS C2 communication service 560, a service corresponding to one specific QFI is mapped to two or more DRBs (DRB = i and DRB = i+1) (S510). Preferably, an SDAP of a UE that receives data mapped to a plurality of DRBs in this manner extracts it as one QoS flow data, and it is proposed that the UE performs efficient decoding by considering duplexing/multiplexing.

In the current embodiment, the importance of a communication service may be determined based on at least one of delay characteristics required for the service, a guaranteed bit rate (GBR) required for the service, security characteristics (or level) required for the service, whether it is related to the safety of operation (or driving), a data transmission error rate required for the service, or the reliability of link maintenance required for the service, to which the present disclosure is not limited, and the determination may be made by additionally considering various service characteristics according to the design of those of ordinary skill in the art.

Although the example of FIG. 13 has been described in the context of downlink data transmission, the concept of DRB duplexing/multiplexing described above may also be substantially applied in the same manner to uplink data transmission.

Specifically, in the case of uplink data transmission, the QFI mapping (520) and the DRB mapping (S510) may be performed in the UE, and the UE may receive a QoS-related rule through a non-access-stratum (NAS) message received from the network. Specifically, in a PDU session setup or modification procedure, the UE may be provided with a QoS rule (or QoS policy) for mapping two or more DRBs to a QoS flow corresponding to a specific QFI.

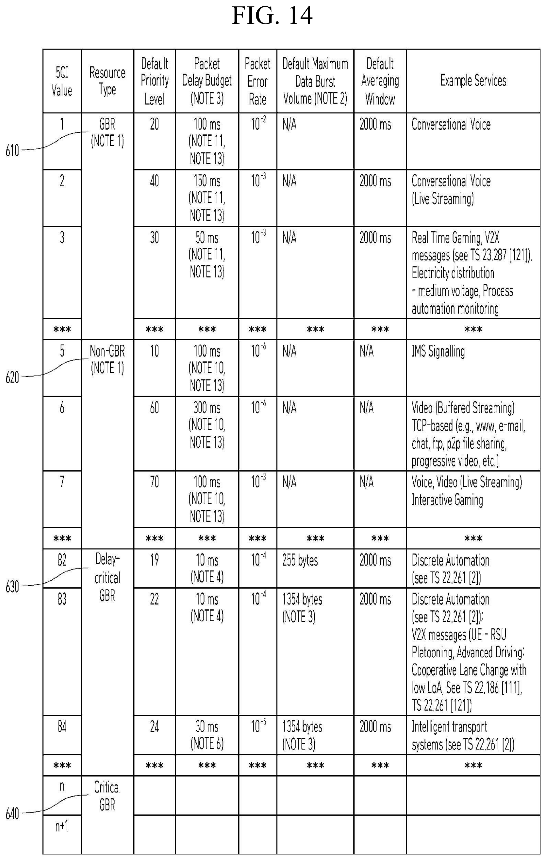

FIG. 14 is a diagram for describing changes of a QoS ID used in a network according to an embodiment of the present disclosure.

A table illustrated in FIG. 14 is a diagram for describing the concept of groups which are added according to the current embodiment, based on the concept of a 5G QoS identifier (5QIs). However, the term 5QI is a concept used in 5G standardization, and does not need to be construed as limiting. For example, when 5GIs are managed in groups for standardized management on a QoS flow basis in a 6G network, they may be referred to as 6QIs.

For current 5QIs, a first group 610 for a GBR resource type, a second group 620 for a non-GBR resource type, and a third group 630 for a delay-critical GBR resource type are defined, and QoS flows are managed/operated through the groups. However, the current embodiment proposes that a fourth group 640 for a resource type for a QoS flow to which two or more DRBs are mapped as described above is additionally included and operated.

Preferably, the fourth group 640 is set for a resource type for a QoS flow for which ultra-reliability or duplicity characteristics are considered additionally, compared to the third group 630.

Although the QoS ID groups as illustrated in FIG. 14 may be used by the UPF 530 of FIG. 12, they may also be used by various entities within an E2E link as well as the UPF 530.

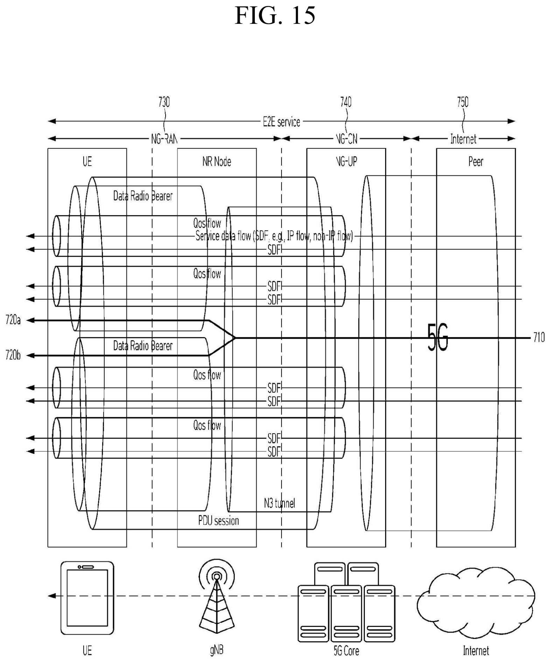

FIG. 15 is a diagram for describing a structure for duplexing/multiplexing DRBs for an important communication service, according to an embodiment of the present disclosure.

In FIG. 15, one arrow indicates a service data flow (SDF), which may include an IP flow and a non-IP flow. Specifically, one SDF may be divided into an Internet link 750, a CN link 740, and a radio link 730.

From the perspective of flows, a network may be viewed as a concept including a gNB and a CN. In addition, an SDF that passes through a UE, the gNB, and the CN may be referred to as an end-to-end (E2E) QoS control flow.

As illustrated in FIG. 15, in duplexing or multiplexing of DRBs, an embodiment of the present disclosure focuses on the radio link 730 between the UE and the gNB rather than the CN link 740, and proposes to duplex/multiplex the DRBs in the radio link 730. This is because the CN link 740 is more stable than communication in the radio link 730, the duplexing/multiplexing of DRBs is focused in the radio link 740 without being performed in the CN link 740.

In the example of FIG. 15, although an SDF for C2 communication is configured as one link 710 in the Internet link 750 and the CN link 740, it is mapped to a first DRB 720a and a second DRB 720b in the radio link 730. That is, a single bearer (or single flow or single session) corresponding to the two or more bearers 720a and 720b may be configured in a link between the gNB and the CN on the link.

However, in another embodiment of the present disclosure, in a specific situation where reliability is threatened (e.g., a malicious user is detected) in the link between the gNB and the CN, two or more bearers (links) (or flows or sessions) may be configured in the same manner as the two or more DRBs 720a and 720b of the radio link.

As described above, in an embodiment of the present disclosure, a link where a bearer is duplexed/multiplexed may be limited to a radio link. In such a case, the handover of the UE may be processed as a success when the target network device receives an RRC reconfiguration complete message from the UE after performing RAP with the UE. That is, in the conditional handover procedure of FIG. 8, after completion of step S770, the handover in the radio link is completed, such that a point in time when the handover is completed in a state where duplexing/multiplexing of the bearer is applied may be determined as such a point in time.

Meanwhile, in another embodiment of the present disclosure, the TN may also regard a point in time after completion of duplexing/multiplexing of the bearer as a handover complete point in time. That is, in the handover procedure of FIG. 8, as data transmission/reception through the duplexed/multiplexed DRB is possible in the TN after completion of an additional procedure of a secondary bearer in step S820, this point in time may be regarded as a handover complete point in time.

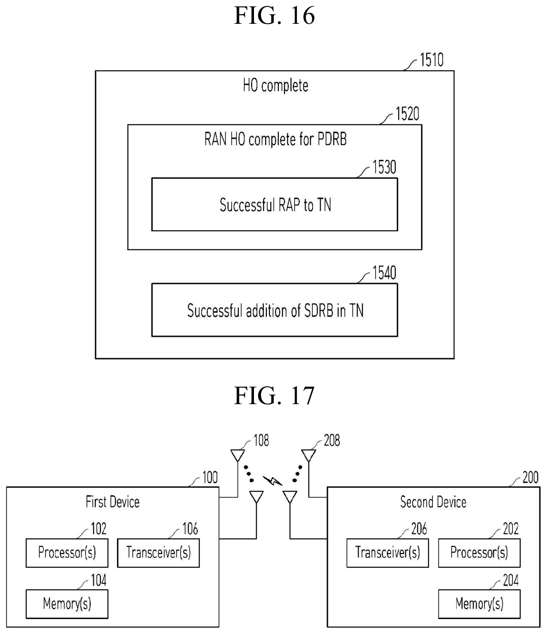

FIG. 16 is a conceptual diagram for comparing a conditional handover with a general handover, according to an embodiment of the present disclosure.

As described above, in a general handover, whether the RAN link handover for the corresponding bearer is completed (1520) may be determined based on whether the RAP with the target node is successful (1530). That is, in the general handover, the RAN link handover may be determined to be completed when the RAP at the target node for the first bearer designated as a specific bearer in the handover request message/handover request response message is successful.

However, when duplexing/multiplexing for the corresponding service flow at the target node is completed and thus a stable service is established at the target node, this case may be set as a handover complete criterion, such that according to the current embodiment, whether the handover is completed (1510) may be determined based on not only whether the RAP with the target node is successful (1530), but also whether handover/addition of the other bearer (one or more second bearers or secondary DRB) for duplexing/multiplexing than the primary bearer is completed (1540).

After the handover is determined to be completed (1510), the target node may instruct the source node to release the UE context and complete the conditional handover according to the current embodiment.

FIG. 17 illustrates wireless devices applicable to the present technology.

Referring to FIG. 17, a first wireless device 100 and a second wireless device 200 may transmit radio signals through a variety of radio access technologies (RATs) (e.g., E-UTRA and NR). Herein, the first wireless device 100 and the second wireless device 200 may correspond to the UE and the network of FIG. 1, respectively. Specifically, the first wireless device 100 and the second wireless device 200 may be applied to various devices located at both ends of a communication link of the UAS illustrated in FIG. 1.

The first wireless device 100 may include at least one processor 102 and at least one memory 104 and further include at least one transceiver 106 and/or at least one antenna 108. The processor 102 may be configured to control the memory 104 and/or the transceiver 106 and implement the description, functions, procedures, proposals, methods, and/or operational flowcharts disclosed in the present disclosure. For example, the processor 102 may process information within the memory 104 to generate first information/signal and then transmit a radio signal including the first information/signal through the transceiver 106. Further, the processor 102 may receive a radio signal including second information/signal through the transceiver 106 and then store information obtained by processing the second information/signal in the memory 104. The memory 104 may be connected to the processor 102 and store various pieces of information related to operations of the processor 102. For example, the memory 104 may store software code including commands for performing some or all of processes controlled by the processor 102 or for performing the description, functions, procedures, proposals, methods, and/or operational flowcharts disclosed in the present disclosure. The processor 102 and the memory 104 may be a part of a communication modem/circuit/chip designed to implement RATs (e.g., LTE E-UTRA or 5G NR). The transceiver 106 may be connected to the processor 102 and transmit and/or receive a radio signal through the at least one antenna 108. The transceiver 106 may include a transmitter and/or a receiver. The transceiver 106 may be interchangeably used with a radio frequency (RF) unit. In the present disclosure, the wireless device may refer to a communication modem/circuit/chip.

The second wireless device 200 may include at least one processor 202 and at least one memory 204 and further include at least one transceiver 206 and/or at least one antenna 208. The processor 202 may be configured to control the memory 204 and/or the transceiver 206 and implement the description, functions, procedures, proposals, methods, and/or operational flowcharts disclosed in the present disclosure. For example, the processor 202 may process information within the memory 204 to generate third information/signal and then transmit a radio signal including the third information/signal through the transceiver 206. Further, the processor 202 may receive a radio signal including fourth information/signal through the transceiver 206 and then store information obtained by processing the fourth information/signal in the memory 204. The memory 204 may be connected to the processor 202 and store various pieces of information related to operations of the processor 202. For example, the memory 204 may store software code including commands for performing some or all of processes controlled by the processor 202 or for performing the description, functions, procedures, proposals, methods, and/or operational flowcharts disclosed in the present disclosure. The processor 202 and the memory 204 may be a part of a communication modem/circuit/chip designed to implement RATs (e.g., LTE E-UTRA or 5G NR). The transceiver 206 may be connected to the processor 202 and transmit and/or receive a radio signal through the at least one antenna 208. The transceiver 206 may include a transmitter and/or a receiver. The transceiver 206 may be interchangeably used with an RF unit. In the present disclosure, the wireless device may refer to a communication modem/circuit/chip.

Hereinafter, hardware elements of the wireless devices 100 and 200 will be described more specifically. One or more protocol layers may be implemented by, but are not limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more protocol data units (PDUs) and/or one or more service data units (SDUs) according to the description, functions, procedures, proposals, methods, and/or operational flowcharts disclosed in the present disclosure. The one or more processors 102 and 202 may generate messages, control information, data, or information according to the description, functions, procedures, proposals, methods, and/or operational flowcharts disclosed in the present disclosure. The one or more processors 102 and 202 may generate signals (e.g., baseband signals) including PDUs, SDUs, messages, control information, data, or information according to the description, functions, procedures, proposals, methods, and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and obtain the PDUs, SDUs, messages, control information, data, or information according to the description, functions, procedures, proposals, methods, and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The description, functions, procedures, proposals, methods, and/or operational flowcharts disclosed in the present disclosure may be implemented using firmware or software and the firmware or software may be configured to include the modules, procedures, or functions. Firmware or software configured to perform the description, functions, procedures, proposals, methods, and/or operational flowcharts disclosed in the present disclosure may be included in the one or more processors 102 and 202 or stored in the one or more memories 104 and 204 so as to be driven by the one or more processors 102 and 202. The description, functions, procedures, proposals, methods, and/or operational flowcharts disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured as read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located inside and/or outside of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of the present disclosure, to one or more other devices. The one or more transceivers 106 and 206 may receive user data, control information, and/or radio signals/channels, mentioned in the description, functions, procedures, proposals, methods, and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may control the one or more transceivers 106 and 206 to transmit user data, control information, or radio signals to one or more other devices. The one or more processors 102 and 202 may control the one or more transceivers 106 and 206 to receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the description, functions, procedures, proposals, methods, and/or operational flowcharts disclosed in the present disclosure, through the one or more antennas 108 and 208. In the present disclosure, the one or more antennas may be a plurality of physical antennas or a plurality of logical antennas (e.g., antenna ports). The one or more transceivers 106 and 206 may convert received radio signals/channels from RF band signals into baseband signals in order to process received user data, control information, and radio signals/channels, using the one or more processors 102 and 202. The one or more transceivers 106 and 206 may convert the user data, control information, and radio signals/channels, processed using the one or more processors 102 and 202 from the base band signals into the RF band signals. To this end, the one or more transceivers 106 and 206 may include (analog) oscillators and/or filters.

The detailed description of the preferred embodiments of the present disclosure disclosed above has been provided to enable those skilled in the art to implement and practice the present disclosure. Although the above description has been given with reference to preferred embodiments of the present disclosure, it will be understood by those skilled in the art that various modifications and changes may be made to the present disclosure without departing from the scope of the present disclosure. For example, those skilled in the art may use configurations described in the above-described embodiments in combination.

Accordingly, the present disclosure is not intended to be limited to the embodiments shown herein, but is intended to have the broadest scope consistent with the principles and novel features disclosed herein.

### INDUSTRIAL APPLICABILITY

The method and apparatus for performing a handover in a bearer configuration state for stably providing an important communication service according to the embodiments of the present disclosure as described above may be used in a communication system that supports an important service such as a C2 communication service of a UAS according to various communication protocols as well as the 3GPP.

## Claims

1. A method of performing a handover by a user equipment (UE) in a mobile communication system, the method comprising:
receiving one communication service flow with a source network through two or more bearers;
receiving a first message comprising configuration information for performing a conditional handover for the two or more bearers from the source network; and
performing a handover for the two or more bearers to the target network based on a point in time where a condition corresponding to the configuration information is satisfied, and a target network.

2. The method of claim 1, wherein the handover for the two or more bearers comprises:
performing a handover to the target network for a first bearer among the two or more bearers; and
adding one or more second bearers among the two or more bearers for the one communication service flow in the target network after the handover for the first bearer.

3. The method of claim 2, wherein the adding of the second bearer is based on that a sequence number state transfer between the source network and the target network is performed after the handover is performed for the first bearer.

4. The method of claim 2, wherein the handover for the two or more bearers is completed based on that the one or more second bearers are added.

5. The method of claim 1, wherein the handover for the two or more bearers comprises performing a handover to the target network for all of the two or more bearers.

6. The method of claim 1, wherein the configuration information comprises one or more candidate target networks and condition information for each of the candidate target networks.

7. The method of claim 6, wherein the point in time and the target network are determined according to whether a condition for each of the candidate target networks is satisfied.

8. The method of claim 1, wherein the first message is a radio resource control (RRC) reconfiguration message, and
the RRC reconfiguration message comprises information designating the two or more bearers as a conditional handover target.

9. The method of claim 1, wherein the mobile communication system comprises an uncrewed aerial system (UAS), and
the one communication service flow served through the two or more bearers comprises a command and control (C2) communication service flow of the UAS.

10. The method of claim 9, wherein the mobile communication system comprises the UAS and a mobile communication service provider system, and
the source network and the target network operate the mobile communication service provider system with the UAS.

11. The method of claim 9, wherein the UE comprises a uncrewed aerial vehicle (UAV).

12. A method of performing a handover for a user equipment (UE) by a source network in a mobile communication system, the method comprising:
providing one communication service flow to the UE through two or more bearers;
transmitting a first message comprising configuration information for performing a conditional handover for the two or more bearers to the UE;
transmitting a handover request message comprising information about the two or more bearers to one or more candidate target networks corresponding to the configuration information; and
receiving an acknowledgement response message from the one or more candidate target networks.

13. The method of claim 12, wherein the handover request message further comprises slice information for supporting the two or more bearers, and
the acknowledgement response message received from a candidate target network not supporting the slice among the one or more candidate target networks comprises information corresponding to non-support for the slice.

14. The method of claim 12, wherein a candidate target network having received a random access request message from the UE among the two or more candidate target networks performs handover for the two or more bearers as a target network.

15. The method of claim 14, wherein the handover for the two or more bearers comprises:
performing a handover to the target network for a first bearer among the two or more bearers; and
adding one or more second bearers among the two or more bearers for the one communication service flow in the target network after the handover for the first bearer.

16. The method of claim 15, wherein the target network prepares for resource allocation for adding the one or more second bearers based on information about the two or more bearers of the handover request message.

17. A user equipment (UE) performing handover in a mobile communication system, the UE comprising:
at least one processor; and
at least one computer memory operably connectable to the at least one processor and storing instructions that, when executed, cause the at least one processor to perform operations,
wherein the operations comprise:
receiving one communication service flow with a source network through two or more bearers;
receiving a first message comprising configuration information for performing a conditional handover for the two or more bearers from the source network; and
performing a handover for the two or more bearers to the target network based on a point in time where a condition corresponding to the configuration information is satisfied, and a target network.

18. A source network supporting handover of a user equipment (UE), the source network comprising:
at least one processor; and
at least one computer memory operably connectable to the at least one processor and storing instructions that, when executed, cause the at least one processor to perform operations,
wherein the operations comprise:
providing one communication service flow to the UE through two or more bearers;
transmitting a first message comprising configuration information for performing a conditional handover for the two or more bearers to the UE;
transmitting a handover request message comprising information about the two or more bearers to one or more candidate target networks corresponding to the configuration information; and
receiving an acknowledgement response message from the one or more candidate target networks.
